# FASCICULE DE BREVET EUROPEEN

(11) **EP 2 369 521 B1**
(45) Date de publication et mention de la délivrance du brevet: **15.01.2014**
(21) Numéro de dépôt: 11154885.5
(22) Date de dépôt: 17.02.2011
(51) Int. Cl.: G06F 21/72, G06F 21/75, H04L 9/00

(54) **Protection de registres contre des perturbations unilatérales**
Schutz von Registern gegen einseitige Störungen
Protection of records against unilateral disruptions

(30) Priorité: 19.02.2010 FR 1051205
(43) Date de publication de la demande: 28.09.2011
(73) Titulaire: STMicroelectronics (Rousset) SAS, 13790 Rousset (FR)
(72) Inventeur: Liardet Pierre-Yvan, 13790, Peynier (FR); Teglia Yannick, 13720, Belcodene (FR); Tournemille Jérome, 83910, Pourrieres (FR)
(74) Mandataire: Thibon, Laurent

(56) Documents cités:
- WO-A2-2005/124506
- US-A1- 2008 056 488

## Description

### Domaine de l'invention

La présente invention concerne de façon générale les circuits électroniques et, plus particulièrement, les unités de traitement de données mettant en oeuvre des algorithmes de chiffrement ou de déchiffrement. L'invention concerne plus particulièrement les mécanismes de protection du contenu de registres contre des perturbations uni-directionnelles de bits qu'ils contiennent.

### Exposé de l'art antérieur

Lorsque l'on utilise une unité de traitement (typiquement un cryptoprocesseur) pour mettre en oeuvre un algorithme de chiffrement, on cherche à vérifier que la clé manipulée n'est pas modifiée (accidentellement ou volontairement), soit lors de son transfert vers le cryptoprocesseur depuis un circuit externe, soit une fois dans celui-ci alors qu'elle est contenue dans un registre spécifique de ce cryptoprocesseur. Les attaques visant à perturber l'état d'un bit d'un registre du cryptoprocesseur sont généralement des attaques utilisant un laser pointé sur un des bits du registre contenant la clé afin d'en perturber la valeur.

Pour contrer une modification lors du transfert, une solution est de recharger la clé dans le cryptoprocesseur le plus souvent possible, généralement à chaque nouveau chiffrement, ou périodiquement. Toutefois, le registre de clé du crytoprocesseur reste sensible aux attaques par laser.

Pour vérifier l'intégré de la clé une fois qu'elle est dans le cryptoprocesseur, le plus simple serait de lire cette clé pour la contrôler à l'extérieur du cryptoprocesseur. Cependant, pour protéger la clé contre d'éventuelles tentatives de piratage, l'élément de mémorisation temporaire (registre) qui contient la clé n'est généralement accessible depuis l'extérieur du cryptoprocesseur qu'en écriture. La vérification d'intégrité consiste alors à vérifier la cohérence de résultats obtenus par deux calculs distincts utilisant la clé contenue dans le cryptoprocesseur. Ces deux calculs sont soit deux chiffrements d'un même message avec la clé, soit un chiffrement suivi d'un déchiffrement.

On a également déjà proposé de vérifier la cohérence entre deux exécutions du même algorithme, respectivement avec la clé et avec la clé complémentée à un. Une telle solution est décrite dans le document US-A-2009/0285398 (B8878, 08-RO-102).

Une difficulté réside dans le fait que les résultats d'un mécanisme de vérification d'intégrité peuvent renseigner un attaquant sur la valeur des bits de cette clé. Par exemple, on suppose qu'une attaque réussie provoque un passage d'un bit à l'état 1. Si le bit attaqué est à l'état 0, il va changer de valeur. Si le bit attaqué est à l'état 1, sa valeur reste inchangée. Dans ce dernier cas, le mécanisme de vérification est incapable de s'apercevoir de l'attaque. Or, l'attaquant sait qu'il a attaqué le bit correspondant. Selon qu'un bit de détection d'attaque change ou non d'état, l'attaquant est donc en mesure de savoir si le bit attaqué était dans un état 0 ou 1. En d'autres termes, si un des bits de la clé est modifié et que les ancienne et nouvelle valeurs de ce bit sont les mêmes, le mécanisme de vérification est incapable de s'en apercevoir, que la vérification soit directe (par relecture) ou indirecte (par deux calculs distincts). Cela rend la clé vulnérable à une attaque ou perturbation connue sous le nom de perturbation unidirectionnelle, qui consiste à forcer un bit de la clé vers une seule des deux valeurs possibles. Par exemple, le bit attaqué est forcé à zéro quel que soit son état (1 ou 0) initial. Le forçage d'un bit dans un seul des deux états peut permettre à un attaquant de déterminer la valeur de ce bit selon que son attaque est ou non détectée (si elle n'est pas détectée, c'est que le bit de la clé a la valeur de forçage - si elle l'est, c'est que le bit de la clé a l'autre état). La répétition de cette attaque sur chaque bit de la clé permet d'obtenir sa valeur.

De plus, une attaque unidirectionnelle peut être effectuée sur plusieurs bits d'un registre simultanément, par exemple en utilisant plusieurs faisceaux laser dirigés vers plusieurs cellules du registre.

On notera que l'attaque par faisceau laser cible des registres utilisés dans les calculs. Les contre-mesures sont donc relatives aux registres utilisés pour ces calculs qui, selon l'algorithme utilisant ce registre, peuvent ne contenir qu'une partie du message et/ou de la clé.

Une difficulté supplémentaire est de fournir une contre-mesure ou mécanisme de protection qui soit de mise en oeuvre simple et qui ne requiert pas de modifier la structure matérielle du cryptoprocesseur.

Le document US 2008/056488 décrit un module cryptographique dont deux registres contiennent respectivement une première donnée relative à une clé et une seconde donnée indépendante de la première donnée.

Le document WO 2005/124506 décrit une architecture cryptographique avec des instructions de masquage contre des attaques DPA et prévoit d'inverser l'état de certains bits en maintenant une probabilité équivalente de 0 et de 1.

### Résumé

Il serait souhaitable de disposer d'un mécanisme de protection du contenu d'un registre qui pallie tout ou partie des inconvénients des mécanismes de vérification d'intégrité ou de protection usuels.

Il serait également souhaitable de proposer un mécanisme capable de détecter des perturbations unidirectionnelles d'un ou de plusieurs bits du registre.

Pour atteindre tout ou partie de ces objets ainsi que d'autres, un mode de réalisation de la présente invention prévoit un procédé de protection d'une clé destinée à être utilisée par un circuit électronique dans un algorithme de chiffrement ou de déchiffrement, comportant les étapes suivantes :
soumettre la clé à une première fonction prenant en compte une valeur de sélection ;
stocker tout ou partie du résultat de cette fonction dans au moins deux registres ayant la même taille que la clé ;
à l'appel de la clé par l'algorithme, lire les contenus desdits registres et les soumettre à une seconde fonction prenant en compte tout ou partie des bits des registres ; et
fournir le résultat de la combinaison en entrée de l'algorithme, la seconde fonction étant telle que le résultat fourni correspond à la clé.

Selon un mode de réalisation de la présente invention, ladite seconde fonction prend également en compte ladite valeur de sélection.

Selon un mode de réalisation de la présente invention, le résultat de la seconde fonction n'est pas stocké dans un registre avant d'être soumis à l'algorithme.

Selon un mode de réalisation de la présente invention, ladite valeur de sélection est un bit de sélection appliqué à chaque bit de la clé.

Selon un mode de réalisation de la présente invention, ladite valeur de sélection est un mot de bits sélectionné de façon non déterministe.

Selon un mode de réalisation de la présente invention, les première et seconde fonctions sont des combinaisons logiques.

Selon un mode de réalisation de la présente invention, la première fonction répartit les bits de la clé ou leurs compléments à un dans deux registres.

Selon un mode de réalisation de la présente invention, la première fonction est une fonction de distribution des bits de la clé.

On prévoit également un circuit électronique adapté à mettre en oeuvre ce procédé.

### Brève description des dessins

Ces objets, caractéristiques et avantages, ainsi que d'autres seront exposés en détail dans la description suivante de modes de réalisation particuliers faite à titre non-limitatif en relation avec les figures jointes parmi lesquelles :
la figure 1 est une vue schématique d'une carte à puce du type à laquelle s'applique à titre d'exemple la présente invention ;
la figure 2 est un schéma bloc d'un système utilisant une unité de chiffrement/déchiffrement de type cryptoprocesseur ;
la figure 3 est un schéma bloc partiel d'un circuit intégrant une unité de chiffrement/déchiffrement et une unité centrale de traitement ;
la figure 4 illustre, sous forme de schéma bloc, un mode de mise en oeuvre du procédé de protection selon la présente invention ; et
la figure 5 est un schéma bloc illustrant un autre mode de mise en oeuvre de la présente invention.

### Description détaillée

De mêmes éléments ont été désignés par de mêmes références aux différentes figures. Par souci de clarté, seuls les étapes et éléments utiles à la compréhension de l'invention ont été représentés et seront décrits. En particulier, l'exploitation faite des données à chiffrer ou des données chiffrées n'a pas été détaillée, l'invention étant compatible avec toute exploitation usuelle. De plus, les éléments de l'unité de traitement cryptographique ou des autres circuits n'ont pas été détaillés, l'invention étant là encore compatible avec les structures habituelles. En outre, l'algorithme de chiffrement exploitant la clé n'a pas été détaillé, les modes de réalisation décrits étant, comme on le verra par la suite, compatibles avec tout algorithme usuel.

On fera par la suite référence au terme chiffrement pour désigner, sauf précision contraire, un chiffrement et/ou un déchiffrement qui sont des mécanismes similaires (application d'un algorithme à des données et à une ou plusieurs clés). De même, on fera par la suite référence au terme "registre" pour désigner un élément de mémorisation temporaire de stockage de bits à base d'une ou plusieurs bascules. En outre, l'invention sera décrite par la suite en relation avec un exemple appliqué à un chiffrement ou déchiffrement mais on notera qu'elle s'applique plus généralement dès qu'une quantité considérée comme secrète chargée dans un registre est manipulée afin d'influencer le comportement du circuit d'une façon observable depuis l'extérieur, par exemple, par un mécanisme de vérification de signature.

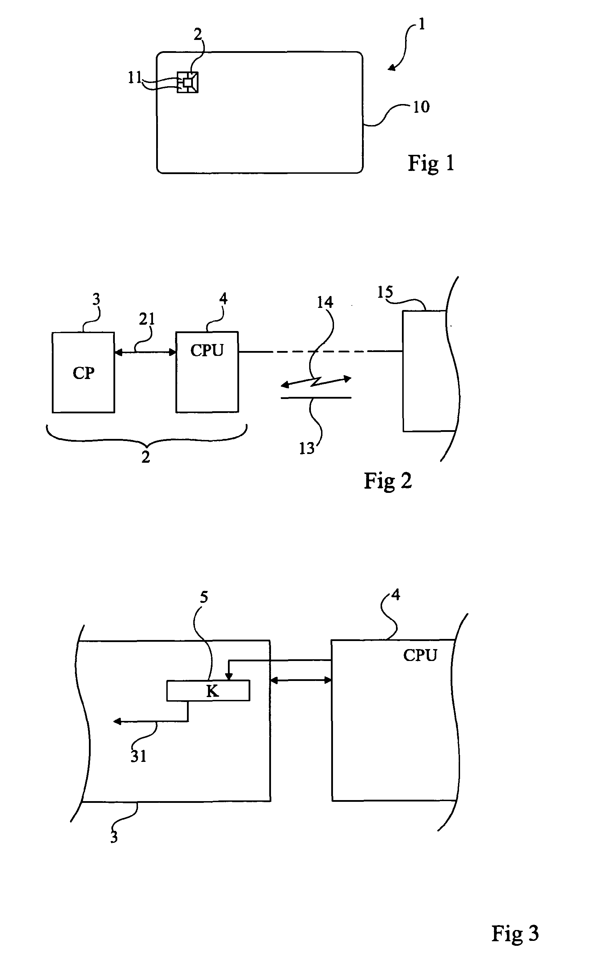

La figure 1 est une représentation schématique d'une carte à puce 1 du type auquel s'appliquent à titre d'exemple les modes de réalisation qui vont être décrits. Une telle carte 1 est constituée d'un support 10 par exemple en matière plastique qui porte ou inclut un ou plusieurs circuits intégrés 2. Le ou les circuits 2 sont susceptibles de communiquer avec l'extérieur de la carte (par exemple, avec un terminal de lecture ou de lecture-écriture) à l'aide de contacts 11 ou par des éléments d'émission-réception sans contact (non représentés) à la manière d'un transpondeur électromagnétique. Le circuit 2 inclut au moins une unité de chiffrement (généralement appelée cryptoprocesseur) capable d'exécuter des calculs de chiffrement et/ou de déchiffrement à partir d'une ou plusieurs clés chargées dans l'unité de traitement.

L'utilisation d'algorithmes de chiffrement trouve de nombreuses applications dans l'industrie électronique, qu'il s'agisse des systèmes à carte à puce, des systèmes de télévision à péage, des systèmes de communication chiffrées, etc. Dans tous les cas, on retrouve une unité de traitement algorithmique capable de mettre en oeuvre des mécanismes de chiffrement et/ou déchiffrement.

La figure 2 est une représentation sous forme de blocs d'un système utilisant un cryptoprocesseur 3 (CP). Ce cryptoprocesseur est un circuit intégré considéré comme inviolable et qui met en oeuvre au moins un algorithme de chiffrement ou de déchiffrement appliqué à des données qu'il reçoit de l'extérieur, en utilisant une ou plusieurs clés qu'il contient ou qu'il reçoit également de l'extérieur. Le cryptoprocesseur 3 est, par exemple, susceptible de communiquer avec une unité de traitement 4 (par exemple une unité centrale de traitement - CPU) d'un circuit 2 intégrant les deux éléments 3 et 4 (et généralement d'autres circuits non représentés) tels que des mémoires (volatiles ou non volatiles), une interface d'entrée/sortie, etc.).

Le circuit 2 est capable de communiquer par liaison filaire 13 ou par liaison sans fil 14 avec un dispositif séparé 15, par exemple, un circuit d'exploitation des données chiffrées ou déchiffrées.

La figure 3 est un détail du système de la figure 2 faisant apparaître, dans le circuit 3, un élément de mémorisation temporaire interne 5 (un registre). Bien entendu, l'unité 3 comporte généralement plusieurs registres pour stocker temporairement les données chiffrées, les données à chiffrer ainsi que d'autres variables et autres éléments qui permettent d'exécuter l'algorithme de chiffrement (logique câblée, mémoire, unité de traitement d'instructions logicielles, etc.). On se préoccupe ici d'un registre particulier qui est destiné à contenir la clé de chiffrement K avant son utilisation par l'algorithme de chiffrement. On désignera par la suite ce registre 5, registre de clé. Le cas échéant, l'unité 3 contient plusieurs registres de clé. De façon similaire, une clé peut être contenue dans une partie d'un registre. Le registre 5 est, par exemple, écrit par l'unité 4 en transférant une clé provenant de l'extérieur ou d'une mémoire non volatile du circuit. Le contenu du registre 5 est lu par le cryptoprocesseur 3 (liaison 31) à chaque fois qu'il a besoin de la clé pour une opération de chiffrement ou de déchiffrement.

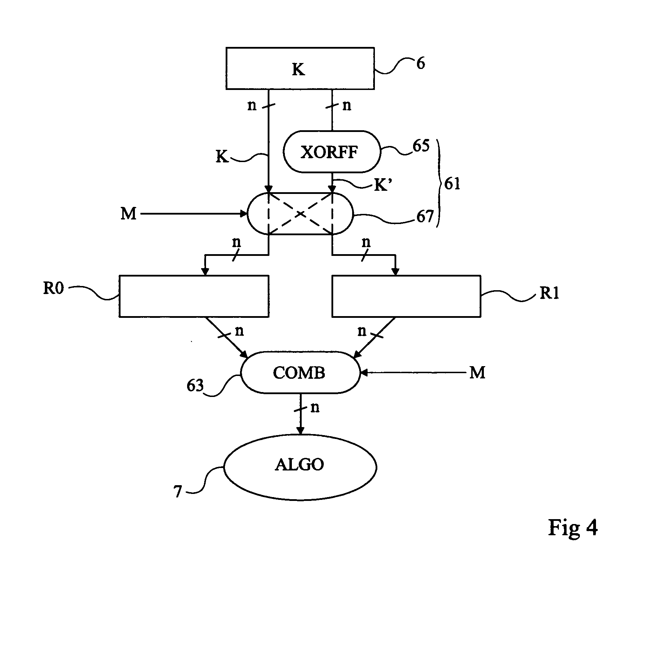

La figure 4 est un schéma bloc d'un mode de réalisation de la présente invention.

On suppose que la clé K ou une représentation de celle-ci, ou plus généralement la quantité secrète que l'on souhaite protéger, est contenue dans un élément de mémorisation 6 interne ou externe au circuit. La clé est soumise à un calcul 65 de complément à un (XOR FF). Puis, chaque bit de la clé K et de son complément à un K' est, de façon non déterministe (par exemple selon l'état 0 ou 1 d'un bit de sélection choisi aléatoirement M), aiguillé (bloc 67) vers l'un ou l'autre de deux registres R0 et R1. Les registres R0 et R1 correspondent, par exemple à des parties d'un même registre 5 (figure 3) ou à des registres différents, pourvu que la taille totale corresponde à au moins deux fois celle de la clé. Dans le cas d'une taille totale supérieure au double de la taille de la clé, on pourra utiliser un indicateur de début de zone utile, choisi par exemple de façon aléatoire dans une zone de plus grande taille.

La fonction 61 réalisée par les blocs 65 et 67 peut être remplacée par des combinaisons logiques dont les résultats sont stockés dans les registres R0 et R1. Par exemple, le registre R0 contient le résultat de l'inverse (complément à un) d'une combinaison de type OU-Exclusif de la clé K et du bit de sélection M (R0=NXOR (K,M)) et le registre R1 contient le résultat d'une combinaison de type OU-Exclusif de la clé K et du bit de sélection M (R1=XOR (K,M) ) .

Une fois ce travail préparatoire effectué, les contenus des registres R0 et R1 sont susceptibles d'être utilisés lorsque le circuit a besoin de mettre en oeuvre un algorithme de chiffrement (bloc 7, ALGO) exploitant la clé K.

A chaque fois que l'algorithme a besoin de la clé, un circuit de commande inclus dans le cryptoprocesseur ou dans l'unité de traitement (non représenté) déclenche la lecture des registres R0 et R1 et soumet leur contenu à une fonction logique 63 (COMB) prenant en compte, pour chaque bit, les contenus respectifs des registres R0 et R1 et la valeur du bit de sélection M. Ainsi, selon l'état 0 ou 1 du bit ayant servi à l'aiguillage 67 dans les registres R0 et R1. Le résultat de la combinaison fournit la valeur de la clé K à l'algorithme 7.

Dans l'exemple de la figure 4, la fonction 63 est une fonction de combinaison logique 63 dont le résultat R valut :
R = (M' OU R0) ET (M OU R1), où M' représente l'état inverse (le complément à 1) du bit de sélection.

La longueur (nombre n de bits) de la valeur de sélection M est, dans cet exemple, égale à 1. Chaque bit des registre R0 et R1 est combiné avec le bit de sélection M afin de générer la valeur de sortie R.

Le bit de sélection M est, de préférence, issu d'un tirage aléatoire à chaque lecture de la clé dans l'élément 6. Le bit de sélection M est stocké dans un registre (non représenté en figure 4) pour permettre l'exécution correcte de la fonction 63. Le complément à un M' du bit de sélection M est calculé à la volée ou est également stocké.

De préférence, la fonction 63 est appliquée en parallèle à tous les bits de la clé.

On notera que la fonction booléenne 63 utilise tous les bits des registres R0 et R1 afin de générer la sortie R. Ainsi, une modification d'un des bits aura un effet direct sur la sortie de la fonction, à la différence d'un multiplexeur qui laisse passer soit une entrée A, soit une entrée B.

On notera que la valeur de la clé issue du bloc de combinaison 63 n'est plus soumise à un stockage dans un registre mais est directement envoyée sur la logique du circuit. Par conséquent, l'absence de stockage à partir du moment où la clé est en clair (non masquée) évite les risques d'attaque.

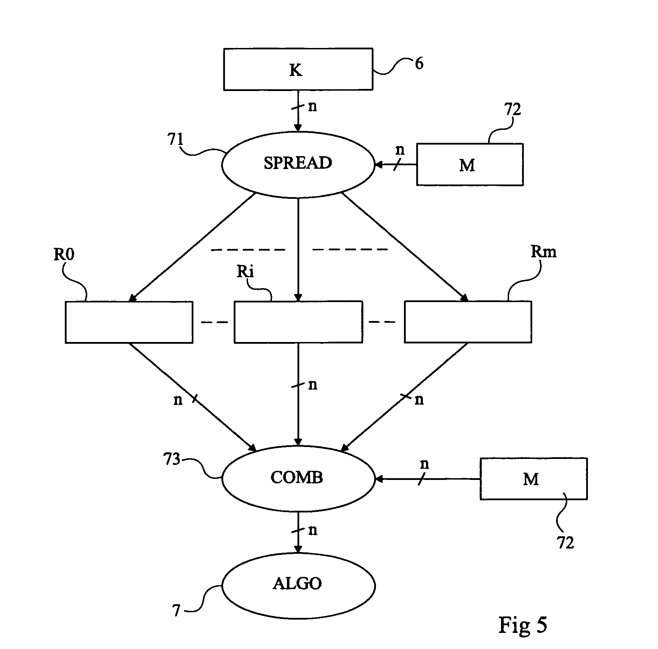

La figure 5 est un schéma bloc d'un autre mode de réalisation. Selon ce mode de réalisation, la clé K issue de l'élément de mémorisation 6 (ou toute valeur dérivée de la clé) est éclatée ou distribuée (bloc 71, SPREAD) dans plusieurs registres R0, ..., Ri, ..., Rm en fonction d'une valeur de sélection M contenue, par exemple dans un autre registre 72. Les registres R0 à Rm peuvent chacun contenir la totalité de la clé K représentée sous une forme différente ou une partie de la clé. Dans ce dernier cas, les parties peuvent avoir des tailles différentes ou identiques, la somme des tailles des sous-parties étant au moins égale à la taille de la clé initiale.

Puis, comme dans le mode de réalisation précédent, lorsque l'algorithme 7 appelle la clé, celle-ci est obtenue en soumettant les contenus respectifs des registres R0 à Rm à une fonction 73 (COMB) paramétrée à partir de la valeur de sélection M contenue dans le registre 72. La fonction 73 dépend de la fonction de dispersion 71 utilisée.

Par exemple, la fonction 71 est une opération de distribution des données c'est-à-dire de répartition de la clé par morceaux, de préférence bit par bit, dans les différents registres. La sélection du registre R0 à Rm contenant les différentes parties de la clé s'effectue d'après la valeur de sélection M. La fonction de combinaison 73 revient alors à concaténer les différentes parties dans un ordre dépendant de la valeur de sélection.

Selon un autre exemple, la fonction 71 représente une distribution des bits de la clé dans les différents registres R0 à Rm qui possèdent la même taille que la clé, les autres bits des registres R0 à Rm contiennent l'état 0 (par exemple, l'état des bits de la valeur de sélection M conditionne lors de la distribution 71, le déplacement d'un pointeur sélectionnant de façon circulaire le registre Ri dans lequel le bit correspondant de la clé est stocké). La fonction 73 représente alors une combinaison bit à bit de type OU de tous les registres R0 à Rm. Dans ce mode de réalisation, la valeur de sélection M n'a pas besoin d'être stockée pour la fonction de recombinaison 73.

Selon encore un autre exemple, la fonction 71 représente une fonction logique sur la clé et la valeur de sélection. Par exemple, la clé peut être représentée en différents formats basés sur un codage dit NRZI (Non Return to Zero Inverted). Ce codage revient à calculer un OU-Exclusif (XOR) entre deux bits successifs (de rang i et i+1, i étant compris entre 1 et n) de la clé et à remplacer le bit de rang i par l'inverse du résultat du OU-Exclusif. En supposant trois registres Ri (m =2) :
le registre R0 peut contenir la clé dans un format dit MSBR en codant deux bits consécutifs égaux à la valeur 0 et deux bits consécutifs inégaux à la valeur 1 (fonction XOR) ;
le registre R1 peut contenir la clé codée au format NRZI (deux bits consécutifs égaux à la valeur 1 et deux bits consécutifs inégaux à la valeur 0) ; et
le registre R2 peut réaliser une permutation de bits avant de démarrer un codage MSBR.

La fonction 73 reconstitue alors les bits de clef répartis dans les registres.

Selon encore un autre exemple, la fonction 71 représente un changement de base de la clé qui se trouve annulée par la fonction 73 une fois que celle-ci est lue.

Comme dans le mode de réalisation précédent, la clé obtenue par l'étape 73 de recombinaison n'est plus soumise à un stockage mais directement fournie aux fonctions logiques utilisées par l'algorithme.

Si tout ou partie des registres Ri ont des tailles supérieures à la longueur de la clé, il peut être nécessaire de prendre en compte un indicateur du début de la portion contenant les données utiles du ou des registres concernés. Selon une autre variante, certains bits de certains registres sont redondants et ne sont alors pas à prendre en compte.

Un avantage des modes de réalisation décrits est qu'un attaquant ne sait pas où est l'expression correcte de la clé. Par conséquent, lorsqu'un attaquant cible une attaque par perturbation unidirectionnelle d'un ou de plusieurs bits d'un des registres, la détection de fautes susceptible de le renseigner va indiquer une faute qui ne dépend pas que de la valeur de la clé mais de la fonction 61 ou 71 appliquée à la clé et à la valeur de sélection. La représentation de la valeur logique du bit de clef est modifiée ainsi que sa localisation spatiale, ce qui rend la détection de faute inexploitable par l'attaquant.

Un autre avantage est que la clé en clair ne reste présente dans aucun registre du cryptoprocesseur de façon complète.

Le fait que la clé soit reconstituée avant son utilisation par l'algorithme rend l'application des modes de réalisation décrits applicable à tout algorithme de chiffrement symétrique ou non. Le mode de réalisation choisi remplace, de façon matérielle ou logicielle, le registre de clé.

Les mécanismes de protection proposés sont compatibles avec les structures usuelles de processeurs et n'en demandent aucune modification. En particulier, il est toujours possible de choisir entre une vérification parallèle ou série et de partager la cellule de calcul.

On peut s'apercevoir de l'efficacité du mécanisme de protection décrit en modifiant, après le chargement de la clé dans le cryptoprocesseur, ou à chaque chargement de cette clé, deux bits d'un des registres. Si le mécanisme a été mis en oeuvre, la clé obtenue par l'attaque n'est pas la bonne. Dans le cas contraire, l'attaque unidirectionnelle à deux ou plusieurs bits fournit la bonne clé.

Différents modes de réalisation ont été décrits. Différentes variantes et modifications sont à la portée de l'homme du métier. En particulier, le choix des fonctions de distribution et de combinaison dépend de l'application et des capacités de calcul du cryptoprocesseur. De plus, la mise en oeuvre pratique est à la portée du l'homme du métier à partir des indications fonctionnelles données ci-dessus, que ce soit pour une mise en oeuvre matérielle ou logicielle.

## Revendications

1. Procédé de protection d'une clé (K) destinée à être utilisée par un circuit électronique dans un algorithme de chiffrement ou de déchiffrement, comportant les étapes suivantes :
soumettre la clé à une première fonction (61 ; 71) de répartition de la clé par morceaux dans les différents registres et prenant en compte une valeur de sélection (M) ;
stocker tout ou partie du résultat de cette fonction dans au moins deux registres (R0, R1 ; R0, ..., Ri, ..., Rm) ayant la même taille (n) que la clé ;
à l'appel de la clé par l'algorithme (7), lire les contenus desdits registres et les soumettre à une seconde fonction (63, 73) prenant en compte tout ou partie des bits des registres (R0, R1 ; R0, ..., Ri, ..., Rm) ; et
fournir le résultat de la combinaison en entrée de l'algorithme, la seconde fonction étant telle que le résultat fourni correspond à la clé.

2. Procédé selon la revendication 1, dans lequel ladite seconde fonction (63, 73) prend également en compte ladite valeur de sélection (M).

3. Procédé selon la revendication 1 ou 2, dans lequel le résultat de la seconde fonction (63, 73) n'est pas stocké dans un registre avant d'être soumis à l'algorithme (7).

4. Procédé selon l'une quelconque des revendications 1 à 3, dans lequel ladite valeur de sélection (M) est un bit de sélection appliqué à chaque bit de la clé (K).

5. Procédé selon l'une quelconque des revendications 1 à 4, dans lequel ladite valeur de sélection (M) est un mot de bits sélectionné de façon non déterministe.

6. Procédé selon l'une quelconque des revendications 1 à 5, dans lequel les première (61 ; 71) et seconde (63 ; 73) fonctions sont des combinaisons logiques.

7. Procédé selon l'une quelconque des revendications 1 à 6, dans lequel la première fonction (61) répartit les bits de la clé (K) ou leurs compléments à un dans deux registres (R0, R1).

8. Procédé selon l'une quelconque des revendications 1 à 6, dans lequel la première fonction (71) est une fonction de distribution des bits de la clé (K).

9. Circuit électronique adapté à mettre en oeuvre le procédé conforme à l'une quelconque des revendications 1 à 8.

## Patentansprüche

1. Ein Verfahren zum Schutz eines Schlüssels (K) zur Verwendung durch eine elektronische Schaltung in einem Verschlüsselungs- oder Entschlüsselungs-Algorithmus, wobei die folgenden Schritte vorgesehen sind:
Unterwerfen des Schlüssels einer ersten Funktion (61; 71) durch Verteilung des Schlüssels durch Teile in unterschiedlichen Registern, Berücksichtigen eines Auswahlwertes (M);
Speichern des Gesamten oder eines Teils des Resultats dieser Funktion in mindesten zwei Registern (R0, R1; R0, ..., Ri, ..., Rm) mit der gleichen Größe (n) wie der Schlüssel;
Lesen, dann wenn der Schlüssel durch den Algorithmus (7) aufgerufen wird, die Inhalte der erwähnten Register und Unterwerfen der Inhalte gegenüber einer zweiten Funktion (63, 73) und zwar der Gesamten oder eines Teils der Bits der Register (R0, R1; R0, ..., Ri, ..., Rm) berücksichtigend; und
Liefern des Resultats der Kombination als eine Eingangsgröße für den Algorithmus, wobei die zweite Funktion derart ist, dass das gelieferte Resultat dem Schlüssel entspricht.

2. Das Verfahren nach Anspruch 1, wobei die zweite Funktion (63, 73) auch den erwähnten Auswahlwert (M) berücksichtigt.

3. Das Verfahren nach Anspruch 1 oder 2, wobei das Resultat der zweiten Funktion (63, 73) nicht in einem Register gespeichert wird, bevor es dem Algorithmus (7) ausgesetzt wird.

4. Das Verfahren nach einem der Ansprüche 1 bis 3, wobei der Auswahlwert (M) ein Auswahl-Bit ist, angewandt auf jedes Bit des Schlüssels (K).

5. Das Verfahren nach einem der Ansprüche 1 bis 4, wobei der Auswahlwert (M) ein nicht-deterministisch ausgewähltes Bit-Wort ist.

6. Das Verfahren nach einem der Ansprüche 1 bis 5, wobei die ersten (61; 71) und zweiten (63; 73) Funktionen logische Kombinationen sind.

7. Das Verfahren nach einem der Ansprüche 1 bis 6, wobei die erste Funktion (61) die Bits des Schlüssels (K) spreizt oder deren Komplementärwerte und zwar in die zwei Register (R0, R1).

8. Das Verfahren nach einem der Ansprüche 1 bis 6, wobei die erste Funktion (71) eine Spreizfunktion der Bits des Schlüssels (K) ist.

9. Eine elektronische Schaltung, die in der Lage ist, das Verfahren eines der Ansprüche 1 bis 8 zu implementieren.

## Claims

1. A method for protecting a key (K) to be used by an electronic circuit in an encryption or decryption algorithm, comprising the steps of:
submitting the key to a first function (61; 71) of distribution of the key by pieces in different registers, taking a selection value (M) into account;
storing all or part of the result of this function in at least two registers (R0, R1; R0, ..., Ri, ..., Rm), having the same size (n) as the key;
when the key is called by the algorithm (7), reading the contents of said registers and submitting them to a second function (63, 73) taking into account all or part of the bits of the registers (R0, R1; R0, ..., Ri, ..., Rm) ; and
providing the result of the combination as an input for the algorithm, the second function being such that the provided result corresponds to the key.

2. The method of claim 1, wherein said second function (63, 73) also takes said selection value (M) into account.

3. The method of claim 1 or 2, wherein the result of the second function (63, 73) is not stored in a register before being submitted to the algorithm (7).

4. The method of any of claims 1 to 3, wherein said selection value (M) is a selection bit applied to each bit of the key (K) .

5. The method of any of claims 1 to 4, wherein said selection value (M) is a non-deterministically selected bit word.

6. The method of any of claims 1 to 5, wherein the first (61; 71) and second (63; 73) functions are logic combinations.

7. The method of any of claims 1 to 6, wherein the first function (61) spreads the bits of the key (K) or their ones' complements into two registers (R0, R1).

8. The method of any of claims 1 to 6, wherein the first function (71) is a function spreading the bits of the key (K) .

9. An electronic circuit capable of implementing the method of any of claims 1 to 8.
